(19) Europäisches Patentamt / European Patent Office / Office européen des brevets

(11) **EP 1 950 395 B1**

(12) **EUROPEAN PATENT SPECIFICATION**

(45) Date of publication and mention
of the grant of the patent:
**05.08.2009 Bulletin 2009/32**

(51) Int Cl.:
*F02D 41/00* (2006.01)   *F02D 41/06* (2006.01)
*F02D 41/16* (2006.01)   *F02P 5/04* (2006.01)

(21) Application number: **08000381.7**

(22) Date of filing: **10.01.2008**

(54) **An intake air control for an internal-combustion engine**

Ansaugluftsteuerung für einen Verbrennungsmotor

Contrôle d'entrée d'air d'un moteur à combustion interne

(84) Designated Contracting States:
**DE GB**

(30) Priority: **24.01.2007 JP 2007014099**

(43) Date of publication of application:
**30.07.2008 Bulletin 2008/31**

(73) Proprietor: **HONDA MOTOR CO., LTD.**
**Tokyo 107-8556 (JP)**

(72) Inventor: **Takamiya, Hideharu**
**Wako-shi**
**Saitama 351-0193 (JP)**

(74) Representative: **Prechtel, Jörg et al**
**Weickmann & Weickmann**
**Patentanwälte**
**Postfach 86 08 20**
**81635 München (DE)**

(56) References cited:
**EP-A- 1 344 897**     **EP-A- 1 669 560**
**EP-A- 1 731 746**     **JP-A- 2002 188 472**
**US-A1- 2003 140 893**

**Description**

BACKGROUND OF THE INVENTION

The present invention relates to an intake air control for an internal-combustion engine (which will be hereinafter referred to as an "engine") and, more particularly to an intake air control for changing a lift amount of an intake valve at engine startup so as to improve the startability of the engine.

Conventionally, in order to reduce the exhaust emission at engine startup, one technique for reducing the opening degree of the throttle valve has been proposed. Another technique is to set the lift amount of an intake valve to a smaller value until an integrated value of the intake air amount exceeds a predetermined value (refer to, for example, Japanese Patent Application Publication No. 2002-188472). Further, there has been proposed a technique for advancing the ignition timing based on the engine rotational speed so as to suppress an abrupt increase in the engine rotational speed at engine startup.

In the above conventional techniques for controlling the exhaust emission, it may be difficult for only the throttle valve to sufficiently reduce the exhaust volume. Further, variations may occur in the capability of reducing the exhaust emission due to variations in the accuracy of measuring the intake air amount.

In the above conventional technique for suppressing an abrupt increase in the engine rotational speed at engine startup, starting a fire mode, which is a mode where a catalyst is activated by retarding the ignition timing to increase the exhaust temperature after startup of the engine, may be delayed because this technique advances the ignition timing at startup of the engine.

Considering these problems, the present invention aims at providing an intake air control that is capable of suppressing the exhaust emission at startup of the engine and quickly activating a catalyst after startup of the engine.

EP-A-1 669 560 discloses setting the lift amount in accordance with a number of times a piston passes through TDC.

EP-A-1 344 897 and JP 2002 188472 A disclose correcting lift amount by temperature dependent engine speed control.

US 2003/140893 A1 and EP-A-1 731 746 disclose gradually changing to idle lift amount and maintaining speed by ignition control.

SUMMARY OF THE INVENTION

According to one aspect of the present invention according to claim 1 and 7, an intake air control of an engine is provided. The engine has a variable valve actuation mechanism for continuously adjusting at least a maximum lift amount of an intake valve to control an intake air amount. At startup of the engine, the lift amount is set in accordance with the number of times that a piston in a cylinder of the engine has passed through a top dead center (TDC) until a rotational speed of the engine reaches an idle rotational speed. After an engine water temperature becomes greater than a predetermined value, the lift amount is corrected using a proportional term that is determined based on the engine rotational speed and an integral term that is determined based on a difference between the engine rotational speed and a desired rotational speed until the engine rotational speed reaches the idle rotational speed. After the engine rotational speed reaches the idle rotational speed, the lift amount is gradually changed to an idle lift amount while the idle rotational speed is maintained through an ignition timing control. The idle lift amount is a lift amount under which the idle rotational speed is able to be maintained.

According to this invention, the exhaust emission at engine startup can be reduced because the engine rotational speed at engine startup is smoothly increased while suppressing an abrupt increase in the rotational speed. Further, a catalyst can be quickly activated by retarding the ignition timing after engine startup. Because the lift amount is controlled based on the engine rotational speed, a constant and stable startability can be implemented independently of variations in friction of individual engines.

According to one embodiment of the invention, the above correction of the lift amount is implemented by a PI control using the proportional term and the integral term. Before the engine water temperature becomes greater than the predetermined value, the PI control is not permitted. After the engine water temperature becomes greater than the predetermined value, the PI control is permitted.

According to one embodiment of the invention, before the engine water temperature becomes greater than the predetermined value, the above setting of the lift amount includes referring to a table for a lower engine water temperature based on the number of times that the piston has passed through the top dead center to determine the lift amount.

According to one embodiment, after the engine water temperature becomes greater than the predetermined value, the above setting of the lift amount includes referring to a table for a higher engine water temperature based on the number of times that the piston has passed through the top dead center to determine the lift amount.

According to one embodiment of the invention, the lift amount is set in such a manner that the lift amount is increased by a predetermined value every time a TDC signal is counted a predetermined number of times.

According to one embodiment of the invention, the proportional term is established in such a manner as to decrease the lift amount with an increase in the rotational speed. The integral term is established in such a manner as to increase the lift amount in accordance with an integrated value of the difference.

BRIEF DESCRIPTION OF THE DRAWINGS

Figure 1 is a block diagram showing an overall structure of an internal-combustion engine and its control unit in accordance with one embodiment of the present invention.

Figure 2 is a time chart showing behaviors of an engine rotational speed, an intake air amount, an ignition timing and a lift amount at engine startup in accordance with one embodiment of the present invention.

Figure 3 is a flowchart of a process for controlling a lift amount of an intake valve at engine startup in accordance with one embodiment of the present invention.

Figure 4 is a flowchart of a subroutine for determining a lift amount Ltdc in accordance with a TDC signal in accordance with one embodiment of the present invention.

DESCRIPTION OF THE PREFERRED EMBODIMENTS

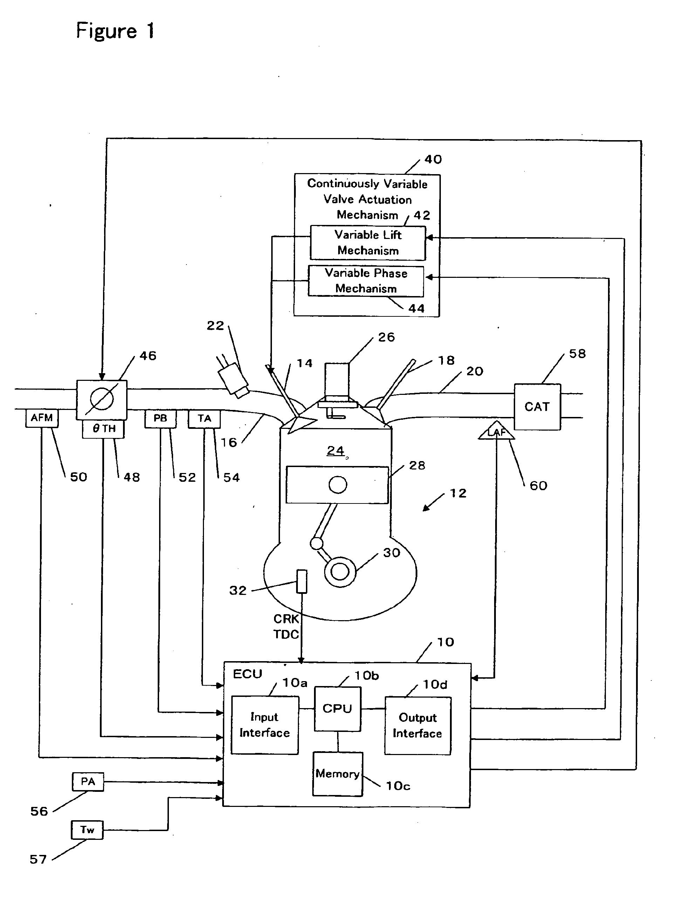

Preferred embodiments of the present invention will be described referring to the attached drawings. Figure 1 is an overall system structure of an engine and its control unit in accordance with one embodiment of the present invention.

An electronic control unit (hereinafter referred to as an "ECU") 10 is a computer having an input interface 10a for receiving data sent from each part of a vehicle, a CPU 10b for carrying out operations for controlling each part of the vehicle, a memory 10c including a read only memory (ROM) and a random access memory (RAM) that temporarily stores data, and an output interface 10d for sending a control signal to each part of the vehicle. Various programs and data for controlling each part of the vehicle are stored in the ROM.

One or more programs for controlling an intake air amount, and data and one or more tables used in performing the intake air amount control according to one embodiment of the invention are stored in the ROM. The ROM may be a rewritable ROM such as an EEPROM. The RAM provides work areas for operations by the CPU 10b, in which data sent from each part of the vehicle as well as a control signal to be sent out to each part of the vehicle are temporarily stored.

Signals sent to the ECU 10 are passed to the input interface 10a. The input interface 10a converts analog signal values into digital signal values. The CPU 10b processes the resulting digital signals, performs operations in accordance with one or more programs stored in the memory 10c, and creates control signals. The output interface 10d sends these control signals to each part of the vehicle.

An engine 12 is, for example, a 4-cycle engine equipped with four cylinders. One of the cylinders is schematically illustrated in Figure 1. The engine 12 is connected to an intake manifold 16 through an intake valve 14 and connected to an exhaust manifold 20 through an exhaust valve 18. A fuel injection valve 22 for injecting fuel in accordance with a control signal from the ECU 10 is provided in the intake manifold 16. Alternatively, the fuel injection valve 22 may be provided in a combustion chamber 24.

The engine 12 introduces an air-fuel mixture of the air taken from the intake manifold 16 and the fuel injected from the fuel injection valve 22 into the combustion chamber 24. A spark plug 26 is provided in the combustion chamber 24 to ignite the spark in accordance with an ignition timing signal from the ECU 10. The air-fuel mixture combusts in response to the spark ignited by the spark plug 26. The combustion increases the volume of the air-fuel mixture. A piston 28 is pushed downward. A reciprocal motion of the piston 28 is converted into a rotational motion of a crank shaft 30. In the case of a 4-cycle engine, a cycle of the engine includes four strokes of intake, compression, combustion and exhaust. The piston 28 travels up and down four times in one cycle.

A crank angle sensor 32 for detecting a rotation angle of the crank shaft 30 is provided in the engine 12. The crank angle sensor 32 outputs a CRK signal and a TDC signal, which are pulse signals, to the ECU 10 in accordance with the rotation of the crankshaft 30.

The CRK signal is a pulse signal that is output at a predetermined crank angle (e.g., at every 30 degrees). The TDC signal is a pulse signal that is output at a crank angle (e.g., at every 180 degrees) associated with a TDC (top dead center) position of the piston 28. These pulse signals are used in various timing controls such as fuel injection timing, ignition timing or the like for operating the engine.

A continuously variable valve actuation mechanism 40 is a mechanism capable of continuously changing a lift amount and an opening/closing timing (phase) of the intake valve 14. In this embodiment, the continuously variable valve actuation mechanism 40 includes a variable lift mechanism 42 and a variable phase mechanism 44.

The variable lift mechanism 42 is a mechanism capable of continuously changing the lift amount of the intake valve 14 in accordance with a control signal from the ECU 10. The variable lift mechanism can be implemented by any known technique. For example, a mechanism implemented with a cam, lift variable link, upper link, and lower link has been proposed in Japanese Patent Application Publication No. 2004-036560. In the mechanism, the angle of the lower link is changed by, for example, an actuator to control a maximum lift amount of the valve.

The variable phase mechanism 44 is a mechanism capable of continuously changing the opening/closing timing (phase) of the intake valve 14 in accordance with a control signal from the ECU 10. The variable phase mechanism can be implemented by any known technique. For example, a mechanism for electromagnetically advancing and retarding the phase of the intake valve has been proposed in Japanese Patent Application Publication No. 2000-227033.

Alternatively, the variable lift mechanism 42 and the variable phase mechanism 44 may be integrated into a single unit. The present invention is not limited to these mechanisms that are capable of continuously changing the lift amount and the phase. The present invention is applicable to a mechanism capable of changing the lift amount and the phase in a step-by-step manner.

In this embodiment, the continuously variable valve actuation mechanism 40 is utilized for controlling the amount of intake air introduced into the engine 12. The intake air amount can be controlled by changing the lift amount of the intake valve 14 via the continuously variable valve actuation mechanism 40.

A throttle valve 46 is provided in the intake manifold 16. The throttle valve 46 is a drive-by-wire (DBW) throttle valve that is driven by an actuator (not illustrated in the drawings) in accordance with a control signal from the ECU 10.

A throttle valve opening sensor 48, which is attached to the throttle valve 46, provides the ECU 10 with a signal corresponding to an opening degree θTH of the throttle valve.

In this embodiment, the throttle valve 46 is used in a constant negative pressure control for keeping a negative pressure inside the intake manifold constant at a desired value. The constant negative pressure control can be implemented by changing the opening degree of the throttle valve 46 to adjust the negative pressure (gauge pressure) inside the intake manifold.

An air flow meter 50 is provided upstream of the throttle valve 46 of the intake manifold 16. The air flow meter 50 outputs to the ECU 10 an electric signal indicating the amount of intake air GAIR.

An intake manifold pressure sensor 52 and an intake air temperature sensor 54 are provided downstream of the throttle valve 46 of the intake manifold 16 to output to the ECU 10 electric signals indicating an absolute pressure Pb inside the intake manifold and a temperature Ta of intake air, respectively.

An atmospheric pressure sensor 56 is provided at an appropriate position outside the engine to output to the ECU 10 an electric signal indicating an atmospheric pressure Pa.

An engine water temperature sensor 57 is attached to the cylinder peripheral wall (not shown), which is filled with cooling water, of the cylinder block of the engine 12 to send to the ECU 10 an electric signal indicating a temperature TW of the cooling water.

A LAF (linear air-fuel) sensor 60 is provided upstream of a catalyst 58 of the exhaust manifold 20. The LAF sensor 60 outputs to the ECU 10 a signal that is proportional to the concentration of oxygen included in the exhaust gas over a wide range from lean to rich.

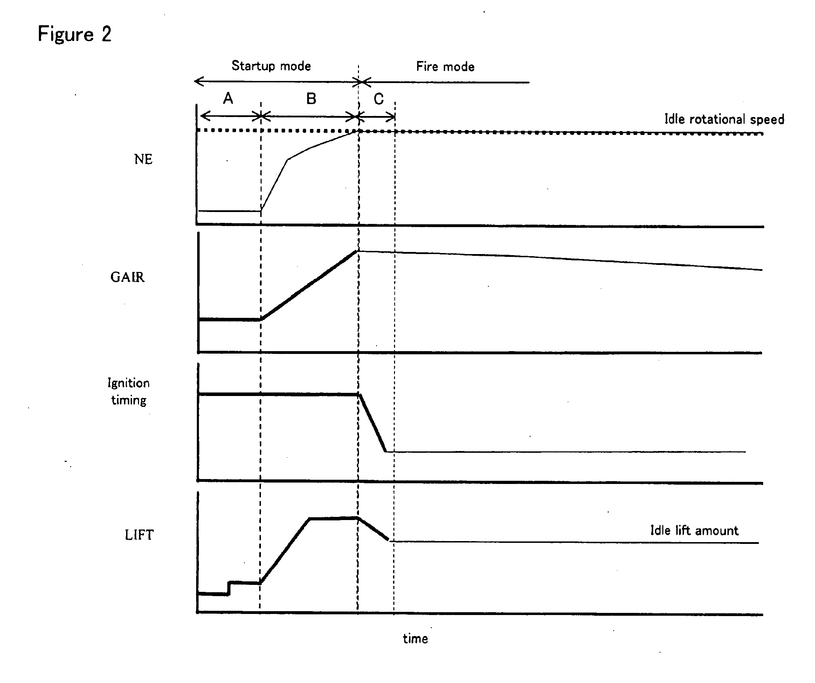

Referring to Figure 2, an operation of the engine 12 at its startup in accordance with one embodiment of the present invention will be described. Figure 2 schematically shows behaviors of an engine rotational speed NE, an intake air amount GAIR, an ignition timing and a lift amount LIFT of the intake valve 14 at engine startup. Horizontal axes indicate an elapsed time from the startup. Vertical axes of the figure indicate, from top to bottom, the engine rotational speed NE, the intake air amount GAIR, the ignition timing and the lift amount LIFT.

Such behaviors can be implemented by controlling the variable lift mechanism 42, the spark plug 26 and so on through the execution of one or more programs stored in the memory 10c of the ECU 10 by the CPU 10b.

At engine startup, it is desirable to promptly increase the engine rotational speed to an idle rotational speed at which an idling operation of the engine is maintained. Further, it is preferably required to suppress an abrupt increase in the engine rotational speed and the exhaust volume so as to reduce the emission. It is also preferably required to secure a constant and stable startability by suppressing friction and/or variations.

In the present embodiment, by, for example, operating a start switch (not shown in the figure) when the engine 12 is at a standstill, an operation mode for starting the engine by cranking the engine by a starter motor (not shown in the figure) is performed. This operation mode will be hereinafter referred to as a "startup mode". In the startup mode, the lift amount LIFT of the intake valve 14 is controlled through the variable lift mechanism 40 such that the engine rotational speed NE smoothly reaches the idle rotational speed that is a desired value.

Then, when the engine rotational speed NE reaches the idle rotational speed, an operation mode for performing a control that quickly activates the catalyst 58 while maintaining the idling operation of the engine 12 is performed. This operation mode will be hereinafter referred to as a "fire mode". In the fire mode, a correction amount for the ignition timing of the engine 12 is determined through a feedback control such that the engine rotational speed NE converges to the idle rotational speed. The correction amount is used to control the ignition timing to be retarded.

It is known that as the ignition timing of the engine 12 is retarded, the exhaust gas temperature rises (see "A quick warm-up system during engine start-up period using adaptive control of intake air and ignition timing, Honda R&D Technical Review, vol. 11, no. 1, 1999, by Ueno, et al.). This is caused by an effect that a decrease in the temperature of the combustion gas is reduced because of a decrease in an adiabatic expansion period in the combustion cycle of the engine. In the fire mode, because the ignition timing of the engine 12 is retarded to increase the exhaust gas temperature, the catalyst 58 can be quickly warmed up and activated.

A detail of the ignition timing control in the fire mode is described in, for example, Japanese Patent No. 3,321,021.

In this embodiment, in order to smoothly implement the above described operation of the engine 12 at engine startup, the lift amount LIFT of the intake valve 14 is determined in four sections, which includes two sections (A and B of Figure 2) of the startup mode and two sections (C and subsequent time period of Figure 2) of the fire mode, by using respective different methods. These methods for determining the lift amounts LIFT in the four sections will be described below.

Section A of Figure 2 represents a state (a cranking state) where the engine rotational speed is low immediately after the engine starts. In the section A, the lift amount is established in accordance with the number of times of measuring the TDC signal. For example, the lift amount is initially set to a minimum value at the outset of the start of the engine. Then, the lift amount is increased by a predetermined value every time the TDC signal is counted a predetermined number of times. The lift amount LIFT of the intake valve 14 in the section A can be expressed as in the equation (1).

$$LIFT = L_{TDC} \qquad (1)$$

Here, $L_{TDC}$ represents the lift amount that is set in accordance with the number of times of measuring the TDC signal.

Section B of Figure 2 represents a state in which the engine rotational speed is lower than the idle rotational speed after the initial explosion in the engine. The initial explosion in the engine is determined by, for example, examining whether or not the engine water temperature TW is higher than a predetermined threshold value. In the section B, the lift amount control in accordance with the number of times of measuring the TDC signal is continued in a similar way to the section A. Further, in the section B, a PI feedback control is performed based on the engine rotational speed NE and the idle rotational speed that is a desired value of the engine rotational speed. The lift amount LIFT of the intake valve in the section B is expressed as in the equation (2).

$$LIFT = L_{TDC} + Lpi \qquad (2)$$

Here, $L_{TDC}$ represents the lift amount that is set in accordance with the number of times of measuring the TDC signal as described referring to the equation (1). Lpi represents a lift amount that is determined by the PI feedback control, which is expressed as in the equation (3).

$$Lpi = -Kp \times NE - Ki \times \sum (NE - Nobj) \qquad (3)$$

Here, NE represents the engine rotational speed. Nobj represents a desired value of the engine rotational speed NE, which is the idle rotational speed in this example. Kp and Ki represent a proportional gain and an integral gain, respectively.

The first term of the right side of the equation (3) is a proportion term of the PI control and the second term is an integral term. The proportion term is set in such a manner as to decrease the lift amount LIFT in accordance with an increase in the engine rotational speed NE. The integral term is set in such a manner as to increase the lift amount LIFT in accordance with an integrated value of an error between the engine rotational speed NE and the idle rotational speed Nobj. Such a PI control avoids the necessity for advancing the ignition timing as in the conventional techniques. A required torque can be achieved by changing the lift amount.

Section C of Figure 2 represents a state where the engine rotational speed reaches the idle rotational speed and the operation mode shifts to the fire mode where the ignition timing is feedback-controlled to be retarded. In the section C, in parallel with the ignition timing control, the lift amount LIFT is changed gradually or in a step-by-step manner to an idle lift amount under which the idle rotational speed can be maintained. The lift amount LIFT of the intake valve in the section C is expressed as in the equation (4).

$$LIFT(\text{current value}) = LIFT(\text{previous value}) + \Delta L \qquad (4)$$

Here, $\Delta L$ represents an amount by which the lift amount is changed per unit time step.

When the section C of Figure 2 terminates, the lift amount reaches the idle lift amount. In the time period subsequent to the section C in the fire mode, the lift amount is constant at the idle lift amount, and the ignition timing is retarded to carry out the fire mode.

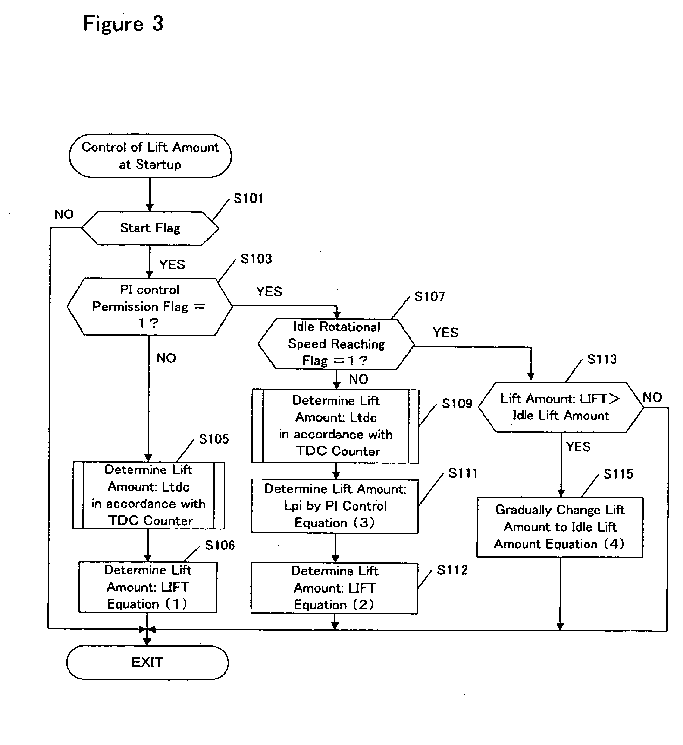

Figure 3 is a flowchart of a process for controlling the lift amount LIFT of the intake valve 14 at engine startup in accordance with one embodiment of the invention. In one embodiment, the process is carried out by the CPU of the ECU 10. The process may be performed in a predetermined time interval.

In step S101, it is determined whether or not an engine start flag has been set. If the engine start flag is one, the process proceeds to step S103. If the engine start flag is zero, the process exits here.

In step S103, it is determined whether or not a PI control permission flag has been set. The PI control permission flag is a flag that is to be set when the engine start flag is one and the engine water temperature is higher than a predetermined value which is, for example, 65 degrees (section B of Figure 2). If the PI control permission flag is zero, the process proceeds to step S105 because the engine water temperature is still low (section A of Figure2) and the PI feedback control has not been permitted. If the PI control permission flag is one, it is determined that the engine water temperature TW is higher than the predetermined value which is, for example, 65 degrees (section B of Figure 2) and the process proceeds to step S107.

In step S105, the lift amount Ltdc is determined in accordance with the TDC signal. This process corresponds to the lift amount control in the section A of Figure 2 as described above.

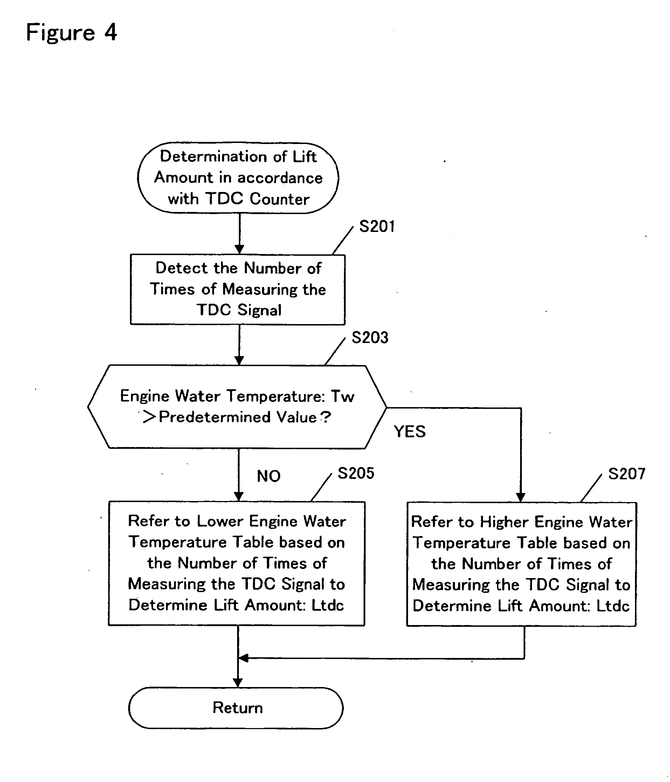

Figure 4 is a flowchart of a subroutine of the process in step S105.

At first, the number of times of measuring the TDC signal is detected (step S201). It is determined whether or not the engine water temperature is higher than a predetermined value which is, for example, 65 degrees (step S203).

Because the PI control permission flag has not been set and the engine water temperature is equal to or lower than the predetermined value in step S105, the process proceeds to step S203, in which the process refers to a table that has been prepared for a lower water temperature so as to determine the lift amount Ltdc corresponding to the number of times of measuring the TDC signal. Such a table may be stored in the memory of the ECU 10.

Referring back to Figure 3, in step S106, the lift amount LIFT of the intake valve 14 is calculated by using the equation (1) and then the process exits here.

In step S107, it is determined whether or not an idle rotation reaching flag has been set. The idle rotation reaching flag is a flag that is to be set when the engine rotational speed NE is equal to or greater than the idle rotational speed Nobj. If the idle rotation reaching flag is zero, it is determined that the engine rotational speed is still lower than the idle rotational speed (section B of Figure 2) and the process proceeds to step S109. If the idle rotation reaching flag is one, it is determined that the engine rotational speed is equal to or greater than the idle rotational speed (section C and subsequent time period of Figure 2) and the process proceeds to step S113.

In step S109, the lift amount Ltdc is determined in accordance with the TDC signal. The process of step S109 through step S112 corresponds to the lift amount control in section B of Figure 2.

Similarly to step S105, the process of step S109 will be described referring to the subroutine of Figure 4.

At first, the number of times of measuring the TDC signal is detected (step S201). It is determined whether or not the engine water temperature TW is higher than the predetermined value which is, for example, 65 degrees (step S203).

Because the PI control permission flag has been set and the engine water temperature is higher than the predetermined value in step S109, the process proceeds to step S207, in which the process refers to a table that has been prepared for a higher engine water temperature to determine the lift amount Ltdc corresponding to the number of times of measuring the TDC signal. Such a table may be stored in the memory 10c of the ECU 10.

Referring back to Figure 3, in step S111, the PI feedback control based on the rotational speed is performed to calculate the lift amount Lpi by the PI feedback in accordance with the equation (3).

In step S112, the lift amount LIFT of the intake valve 14 is calculated by using the equation (2) and the process exits here.

In step S113, it is determined whether or not the current lift amount LIFT is greater than the idle lift amount.

If the current lift amount LIFT is greater than the idle lift amount (section C of Figure 2), the process proceeds to step S115, in which the lift amount is calculated using the equation (4) such that the lift amount shifts to the idle lift amount gradually or in a step by step manner. Then, the process exits here.

If the current lift amount LIFT is equal to or less than the idle lift amount (after section C of Figure 2), it is determined that the lift amount LIFT has reached the idle lift amount and the process exits.

According to the present invention, by changing the method for establishing the lift amount in accordance with the engine rotational speed and the engine water temperature, the engine rotational speed at engine startup can be smoothly increased while suppressing an abrupt increase in the rotational speed. Accordingly, the salability at engine startup fulfills expectations and the exhaust emission is reduced by a decrease in the exhaust volume.

Further, according to the present invention, because the intake air amount and the engine rotational speed are controlled by changing the lift amount of the intake valve at engine startup, a control for quickly warming up a catalyst by retarding the ignition timing after engine startup can be promptly started. Accordingly, the salability at engine startup fulfills expectations and the emission by the control for quickly warming up a catalyst after engine startup can be reduced.

Further, according to the present invention, because the engine rotational speed is always monitored, a constant and stable startability can be implemented independently of variations in friction of individual engines.

In one embodiment of the invention, the above described intake air control is implemented in a computer program embodied on a computer readable medium.

Although the present invention has been described above with reference to some embodiments, the present invention is not limited to those embodiments but can be modified without departing from the scope of the present invention, which is defined in the appendent claims.

The present invention provides an intake air control that is capable of suppressing the exhaust emission at engine startup and quickly activating a catalyst after engine startup. An engine has a variable valve actuation mechanism for continuously adjusting at least a lift amount of an intake valve to control an intake air amount. At startup of the engine, the lift amount is set in accordance with the number of times that a piston in a cylinder of the engine has passed through a top dead center until a rotational speed of the engine reaches an idle rotational speed. After an engine water temperature becomes greater than a predetermined value, the lift amount is corrected using a proportion term that is determined based on the engine rotational speed and an integral term that is determined based on a difference between the engine rotational speed and the idle rotational speed until the engine rotational speed reaches the idle rotational speed. After the engine rotational speed reaches the idle rotational speed, the lift amount is gradually changed to an idle lift amount while maintaining the idle rotational speed through an ignition timing control. The idle lift amount is a lift amount under which the idle rotational speed is able to be maintained.

**Claims**

1. An intake air controlling apparatus of an internal-combustion engine (12) having a variable valve actuation mechanism (42) for continuously adjusting at least a maximum lift amount (LIFT) of an intake valve (14) to control an intake air amount, the apparatus comprising:

   means for at startup of the engine, setting the lift amount in accordance with the number of times that a piston (28) in a cylinder of the engine (12) has passed through a top dead center (TDC) until a rotational speed (NE) of the engine (12) reaches an idle rotational speed (NE);
   means for, after an engine water temperature (Tw) becomes greater than a predetermined value, correcting the lift amount (LIFT) by using a proportion term that is determined based on the engine rotational speed (NE) and an integral term that is determined based on a difference between the engine rotational speed (NE) and a
   - desired rotational speed until the engine rotational speed (NE) reaches the idle rotational speed; and
   means for, after the engine rotational speed (NE) reaches the idle rotational speed, gradually changing the lift amount (LIFT) to an idle lift amount while maintaining the idle rotational speed through the ignition timing control, the idle lift amount being a lift amount under which the idle rotational speed is able to be maintained

2. The apparatus of claim 1, wherein the correction of the lift amount (LIFT) by the means for correcting the lift amount is implemented by a PI control using the proportional term and the integral term; and
   wherein, before the engine water temperature (Tw) becomes greater than the predetermined value, the PI control is not permitted;
   and
   wherein, after the engine water temperature (Tw) becomes greater than the predetermined value, the PI control is permitted.

3. The apparatus of claim 1, further comprises means for storing a table for a lower engine water temperature; and
   wherein the means for setting the lift amount includes means for before the engine water temperature (Tw) becomes greater that the predetermined value, referring to the table for a lower engine water temperature based on the number of times that the piston (28) has passed through the top dead center (TDC) to determine the lift amount (LIFT).

4. The apparatus of claim 1, further comprising means for storing a table for a higher engine water temperature; and

wherein means for setting the lift amount includes means for, after the engine water temperature (Tw) becomes greater than the predetermined value, referring to the table for a higher engine water temperature based on the number of times that the piston (28) has passed through the top dead center (TDC) to determine the lift amount (LIFT).

5. The apparatus of claim 1, wherein means for setting the lift amount includes means for increasing the lift amount (LIFT) by a predetermined value every time a TDC signal is counted a predetermined number of times.

6. The apparatus of claim 1, wherein the proportional term is established in such a manner as to decrease the lift amount (LIFT) with an increase in the rotational speed (NE); and
wherein the integral term is established in such a manner as to increase the lift amount (LIFT) in accordance with an integrated value of the difference.

7. A method for controlling intake air of an internal-combustion engine (12) having a variable valve actuation mechanism (42) for continuously adjusting at least a maximum lift amount (LIFT) of an intake valve (14) to control an intake air amount, the method comprising:

at startup of the engine, setting the lift amount in accordance with the number of times that a piston (28) in a cylinder of the engine (12) has passed through a top dead center (TDC) until a rotational speed (NE) of the engine (12) reaches an idle rotational speed:

after an engine water temperature (Tw) becomes greater that a predetermined value, correcting the lift amount (LIFT) by using a proportion term that is determined based on the engine rotational speed (NE) and an integral term that is determined based on a difference between the engine rotational speed (NE) and a desired rotational speed (NE) until the engine rotational speed reaches the idle rotational speed; and after the engine rotational speed (NE) reaches the idle rotational speed, gradually changing the lift amount (LIFT) to an idle lift amount while maintaining the idle rotational speed through an ignition timing control, the idle lift amount being a lift amount under which the idle rotational speed is able to be maintained.

8. The method of claim 7, wherein the step of correcting the lift amount (LIFT) includes performing a PI control using the proportional term and the integral term; and
wherein the method further comprising:

before the engine water temperature (Tw) becomes greater than the predetermined value, not permitting the PI control; and
after the engine water temperature (Tw) becomes greater than the predetermined value, permitting the PI control.

9. The method of claim 7, wherein the step of setting the lift amount includes, before the engine water temperature becomes greater than the predetermined value, referring to a table fro a lower engine water temperature (Tw) based on the number of times that the piston (28) has passed through the top dead center (TDC) to determine the lift amount (LIFT).

10. The method of claim 7, wherein the step of setting the lift amount includes, after the engine water temperature (Tw) becomes greater than the predetermined value, referring to a table for a higher engine water temperature based on the number of times that the piston (28) has passed through the top dead center (TDC) to determine the lift amount.

11. The method of claim 7, wherein the step of setting the lift amount includes increasing the lift amount (LIFT) by a predetermined value every time a TDC signal is counted a predetermined number of times.

12. The method of claim 7, wherein the proportional term is established in such a manner as to decrease the lift amount (LIFT) with an increase in the rotational speed (NE); and
wherein the integral term is established in such a manner as to increase the lift amount (LIFT) in accordance with an integrated value of the difference.

**Patentansprüche**

1. Ansaugluftsteuer/regelvorrichtung eines Verbrennungsmotors (12), der einen variablen Ventilbetätigungsmechanismus (42) zum kontinuierlichen Einstellen zumindest eines maximalen Hubbetrags (LIFT) eines Einlassventils (14) zur Steuerung einer Ansaugluftmenge aufweist, wobei die Vorrichtung umfasst:

ein Mittel, um beim Start des Motors den Hubbetrag gemäß der Anzahl von Malen zu setzen, zu denen ein Kolben (28) in einem Zylinder des Motors (12) einen oberen Totpunkt (TDC) durchlaufen hat, bis eine Drehzahl (NE) des Motors (12) eine Leerlaufdrehzahl (NE) erreicht;

ein Mittel, um, nachdem eine Motorwassertemperatur (Tw) größer als ein vorbestimmter Wert geworden ist, den Hubbetrag (LIFT) mittels eines Proportionalterms, der auf der Basis der Motordrehzahl (NE) bestimmt ist, und eines Integralterms, der auf der Basis einer Differenz zwischen der Motordrehzahl (NE) und einer Solldrehzahl bestimmt ist, zu korrigieren, bis die Motordrehzahl (NE) die Leerlaufdrehzahl erreicht; und

ein Mittel, um, nachdem die Motordrehzahl (NE) die Leerlaufdrehzahl erreicht hat, den Hubbetrag (LIFT) allmählich auf einen Leerlaufhubbetrag zu ändern, während die Leerlaufdrehzahl durch Zündzeitsteuerung beibehalten wird, wobei der Leerlaufhubbetrag ein Hubbetrag ist, unter dem die Leerlaufdrehzahl beibehalten werden kann.

2.  Die Vorrichtung von Anspruch 1, worin die Korrektur des Hubbetrags (LIFT) durch das Mittel zum Korrigieren des Hubbetrags durch eine PI-Regelung mittels des Proportionalterms und des Integralterms implementiert ist; und
worin, bevor die Motorwassertemperatur (Tw) größer als der vorbestimmte Wert wird, die PI-Regelung nicht zugelassen wird; und
worin, nachdem die Motorwassertemperatur (Tw) größer als der vorbestimmte Wert geworden ist, die PI-Regelung zugelassen wird.

3.  Die Vorrichtung nach Anspruch 1, die ferner ein Mittel zum Speichern einer Tabelle für niedrige Motorwassertemperatur aufweist; und
worin das Mittel zum Setzen des Hubbetrags ein Mittel enthält, um, bevor die Motorwassertemperatur (Tw) größer als der vorbestimmte Wert wird, auf die Tabelle für niedrige Motorwassertemperatur basierend auf der Anzahl von Malen, zu denen der Kolben (28) den oberen Totpunkt (TDC) durchlaufen hat, Bezug zu nehmen, um den Hubbetrag (LIFT) zu bestimmen.

4.  Die Vorrichtung von Anspruch 1, die ferner ein Mittel zum Speichern einer Tabelle für höhere Motorwassertemperatur aufweist; und
worin das Mittel zum Setzen des Hubbetrags ein Mittel enthält, um, nachdem die Motorwassertemperatur (Tw) größer als der vorbestimmte Wert geworden ist, auf die Tabelle für höhere Motorwassertemperatur basierend auf der Anzahl von Malen, zu denen der Kolben (28) den oberen Totpunkt (TDC) durchlaufen hat, Bezug zu nehmen, um den Hubbetrag (LIFT) zu bestimmen.

5.  Die Vorrichtung von Anspruch 1, worin das Mittel zum Setzen des Hubbetrags ein Mittel enthält, um jedesmal, wenn eine vorbestimmte Anzahl von Malen ein TDC-Signal gezählt wird, den Hubbetrag (LIFT) um einen vorbestimmten Wert zu vergrößern.

6.  Die Vorrichtung von Anspruch 1, worin der Proportionalterm derart aufgestellt ist, dass der Hubbetrag (LIFT) mit zunehmender Drehzahl (NE) verringert wird; und
worin der Integralterm derart aufgestellt ist, dass der Hubbetrag (LIFT) gemäß einem integrierten Wert der Differenz vergrößert wird.

7.  Verfahren zum Steuern/Regeln der Ansaugluft eines Verbrennungsmotors (12), der einen variablen Ventilbetätigungsmechanismus (42) zum kontinuierlichen Einstellen zumindest eines maximalen Hubbetrags (LIFT) eines Einlassventils (14) zur Steuerung einer Ansaugluftmenge aufweist, wobei das Verfahren umfasst:

beim Start des Motors den Hubbetrag gemäß der Anzahl von Malen zu setzen, zu denen ein Kolben (28) in einem Zylinder des Motors (12) einen oberen Totpunkt (TDC) durchlaufen hat, bis eine Drehzahl (NE) des Motors (12) eine Leerlaufdrehzahl (NE) erreicht;

nachdem eine Motorwassertemperatur (Tw) größer als ein vorbestimmter Wert geworden ist, den Hubbetrag (LIFT) mittels eines Proportionalterms, der auf der Basis der Motordrehzahl (NE) bestimmt ist, und eines Integralterms, der auf der Basis einer Differenz zwischen der Motordrehzahl (NE) und einer Solldrehzahl bestimmt ist, zu korrigieren, bis die Motordrehzahl (NE) die Leerlaufdrehzahl erreicht; und

nachdem die Motordrehzahl (NE) die Leerlaufdrehzahl erreicht hat, den Hubbetrag (LIFT) allmählich zu einer Leerlaufhubbetrag zu ändern, während die Leerlaufdrehzahl durch Zündzeitsteuerung beibehalten wird, wobei der Leerlaufhubbetrag ein Hubbetrag ist, unter dem die Leerlaufdrehzahl beibehalten werden kann.

**8.** Das Verfahren nach Anspruch 7, worin der Schritt des Korrigierens des Hubbetrags (LIFT) enthält, eine PI-Regelung mittels des Proportionalterms und des Integralterms durchzuführen; und
wobei das Verfahren ferner umfasst:

bevor die Motorwassertemperatur (Tw) größer als der vorbestimmte Wert wird, die PI-Regelung nicht zuzulassen; und
nachdem die Motorwassertemperatur (Tw) größer als der vorbestimmte Wert geworden ist, die PI-Regelung zuzulassen.

**9.** Das Verfahren nach Anspruch 7, worin der Schritt des Setzens des Hubbetrags enthält, bevor die Motorwassertemperatur (Tw) größer als der vorbestimmte Wert wird, auf eine Tabelle für niedrige Motorwassertemperatur basierend auf der Anzahl von Malen, von denen der Kolben (28) den oberen Totpunkt (TDC) durchlaufen hat, Bezug zu nehmen, um den Hubbetrag (LIFT) zu bestimmen.

**10.** Das Verfahren nach Anspruch 7, worin der Schritt des Setzens des Hubbetrags enthält, nachdem die Motorwassertemperatur (Tw) größer als der vorbestimmte Wert geworden ist, auf eine Tabelle für höhere Motorwassertemperatur basierend auf der Anzahl von Malen, zu denen der Kolben (28) den oberen Totpunkt (TDC) durchlaufen hat, Bezug zu nehmen, um den Hubbetrag (LIFT) zu bestimmen.

**11.** Das Verfahren nach Anspruch 7, worin der Schritt des Setzens des Hubbetrags enthält, den Hubbetrag (LIFT) um einen vorbestimmten Wert zu jedesmal vergrößern, wenn ein TDC-Signal eine vorbestimmte Anzahl von Malen gezählt wird.

**12.** Das Verfahren nach Anspruch 7, worin der Proportionalterm derart aufgestellt ist, dass der Hubbetrag (LIFT) mit zunehmender Drehzahl (NE) verringert wird; und
worin der Integralterm derart aufgestellt ist, dass der Hubbetrag (LIFT) gemäß einem integrierten Wert der Differenz vergrößert wird.

## Revendications

**1.** Appareil de commande d'air d'admission d'un moteur à combustion interne (12) comportant un mécanisme d'actionnement de soupape variable (42) permettant d'ajuster en continu au moins une quantité de levée maximale (LIFT) d'une soupape d'admission (14) pour commander une quantité d'air d'admission, l'appareil comprenant :

un moyen permettant, lors du démarrage du moteur, d'établir la quantité de levée selon le nombre de fois où un piston (28) dans un cylindre de moteur (12) est passé par un point mort haut (TDC) jusqu'à ce qu'une vitesse de rotation (NE) du moteur (12) atteigne une vitesse de rotation (NE) au ralenti ;
un moyen permettant, après qu'une température d'eau du moteur (Tw) devient supérieure à une valeur prédéterminée, de corriger la quantité de levée (LIFT) en utilisant un terme de proportion qui est déterminé en fonction de la vitesse de rotation (NE) du moteur et un terme intégral qui est déterminé en fonction d'une différence entre la vitesse de rotation (NE) du moteur et une vitesse de rotation souhaitée jusqu'à ce que la vitesse de rotation (NE) du moteur atteigne la vitesse de rotation au ralenti ; et
un moyen permettant, après que la vitesse de rotation (NE) du moteur atteint la vitesse de rotation au ralenti, de transformer graduellement la quantité de levée (LIFT) en une quantité de levée au ralenti tout en maintenant la vitesse de rotation au ralenti à l'aide de la commande de calage d'allumage, la quantité de levée au ralenti étant une quantité de levée sous laquelle la vitesse de rotation au ralenti peut être maintenue.

**2.** Appareil selon la revendication 1, dans lequel la correction d'une quantité de levée (LIFT) par le moyen de correction de la quantité de levée est mise en oeuvre par une commande PI en utilisant le terme proportionnel et le terme intégral, et
dans lequel, avant que la température d'eau du moteur (Tw) ne soit supérieure à une valeur prédéterminée, la commande PI n'est pas permise ; et
dans lequel, après que la température d'eau du moteur (Tw) devient supérieure à une valeur prédéterminée, la commande PI est permise.

**3.** Appareil selon la revendication 1, comprenant en outre un moyen de stockage d'une table pour une température d'eau du moteur inférieure ; et

dans lequel le moyen pour établir la quantité de levée comprend un moyen permettant, avant que la température d'eau du moteur (Tw) ne devienne supérieure à la valeur prédéterminée, de consulter la table pour une température d'eau du moteur inférieure en fonction du nombre de fois où le piston (28) est passé par le point mort haut (TDC) pour déterminer la quantité de levée (LIFT).

4. Appareil selon la revendication 1, comprenant en outre un moyen de stockage d'une table pour une température d'eau du moteur supérieure ; et
dans lequel le moyen pour établir la quantité de levée comprend un moyen permettant, après que la température d'eau du moteur (Tw) devient supérieure à la valeur prédéterminée, de consulter la table pour une température d'eau du moteur supérieure en fonction du nombre de fois où le piston (28) est passé par le point mort haut (TDC) pour déterminer la quantité de levée (LIFT).

5. Appareil selon la revendication 1, dans lequel un moyen pour établir la quantité de levée comprend un moyen pour augmenter la quantité de levée (LIFT) d'une valeur prédéterminée chaque fois qu'un signal TDC est compté un nombre de fois prédéterminé.

6. Appareil selon la revendication 1, dans lequel le terme proportionnel est établi de sorte à diminuer la quantité de levée (LIFT) avec une augmentation de la vitesse de rotation (NE) ; et
dans lequel le terme intégral est établi de sorte à augmenter la quantité de levée (LIFT) selon une valeur intégrée de la différence.

7. Procédé de commande d'air d'admission d'un moteur à combustion interne (12) comportant un mécanisme d'actionnement de soupape variable (42) permettant d'ajuster en continu au moins une quantité de levée maximale (LIFT) d'une soupape d'admission (14) pour commander une quantité d'air d'admission, le procédé comprenant les étapes consistant à :

lors du démarrage du moteur, établir la quantité de levée selon le nombre de fois où un piston (28) dans un cylindre du moteur (12) est passé par un point mort haut (TDC) jusqu'à ce qu'une vitesse de rotation (NE) du moteur (12) atteigne une vitesse de rotation au ralenti ;
après qu'une température d'eau du moteur (Tw) devient supérieure à une valeur prédéterminée, corriger la quantité de levée (LIFT) en utilisant un terme de proportion qui est déterminé en fonction de la vitesse de rotation (NE) du moteur et un terme intégral qui est déterminé en fonction d'une différence entre la vitesse de rotation (NE) du moteur et une vitesse de rotation (NE) souhaitée jusqu'à ce que la vitesse de rotation du moteur atteigne la vitesse de rotation au ralenti ; et
après que la vitesse de rotation (NE) du moteur atteint la vitesse de rotation au ralenti, transformer graduellement la quantité de levée (LIFT) en une quantité de levée au ralenti tout en maintenant la vitesse de rotation au ralenti à l'aide d'une commande de calage d'allumage, la quantité de levée au ralenti étant une quantité de levée sous laquelle la vitesse de rotation au ralenti peut être maintenue.

8. Procédé selon la revendication 7, dans lequel l'étape de correction de la quantité de levée (LIFT) comprend l'étape consistant à réaliser une commande PI en utilisant le terme proportionnel et le terme intégral ; et
dans lequel le procédé comprend en outre les étapes consistant à :

avant que la température d'eau du moteur (Tw) ne devienne supérieure à la valeur prédéterminée, ne pas permettre la commande PI ; et
après que la température d'eau du moteur (Tw) devient supérieure à la valeur prédéterminée, permettre la commande PI.

9. Procédé selon la revendication 7, dans lequel l'étape consistant à établir la quantité de levée comprend, avant que la température d'eau du moteur ne devienne supérieure à la valeur prédéterminée, la consultation d'une table pour une température d'eau du moteur inférieure (Tw) en fonction du nombre de fois où le piston (28) est passé par le point mort haut (TDC) pour déterminer la quantité de levée (LIFT).

10. Procédé selon la revendication 7, dans lequel l'étape consistant à établir la quantité de levée comprend, après que la température d'eau du moteur (Tw) devient supérieure à la valeur prédéterminée, la consultation d'une table pour une température d'eau du moteur supérieure en fonction du nombre de fois où le piston (28) est passé par le point mort haut (TDC) pour déterminer la quantité de levée.

**11.** Procédé selon la revendication 7, dans lequel l'étape consistant à établir la quantité de levée comprend l'augmentation de la quantité de levée (LIFT) d'une valeur prédéterminée chaque fois qu'un signal TDC est compté un nombre de fois prédéterminé.

**12.** Procédé selon la revendication 7, dans lequel le terme proportionnel est établi de sorte à diminuer la quantité de levée (LIFT) avec une augmentation de la vitesse de rotation (NE) ; et
dans lequel le terme intégral est établi de manière à augmenter la quantité de levée (LIFT) selon une valeur intégrée de la différence.

# Figure 1

# Figure 2

# Figure 3

```
        ┌─────────────────────┐
        │ Control of Lift Amount│
        │     at Startup        │
        └──────────┬──────────┘
                   │                    S101
NO    ┌────────────▼────────────┐
 ◄────┤       Start Flag         │
      └────────────┬────────────┘
                   │ YES              S103
                   │                   YES                      S107
      ┌────────────▼────────────┐───────────┐
      │     PI control          │           │
      │  Permission Flag =      │     ┌──────▼──────────┐           YES
      │         1 ?             │     │ Idle Rotational │───────────────────┐
      └────────────┬────────────┘     │ Speed Reaching  │                   │        S113
                   │ NO               │   Flag = 1 ?    │                   │
                   │                  └──────┬──────────┘          ┌────────▼────────┐   NO
                   │                         │ NO                  │ Lift Amount: LIFT>│────┐
                   │                  ┌──────▼──────────┐   S109   │ Idle Lift Amount  │    │
                   │                  │ Determine Lift  │          └────────┬────────┘    │
                   │                  │ Amount: Ltdc    │                   │ YES          │
                   │         S105     │ in accordance   │                   │       S115   │
      ┌────────────▼────────┐         │    with         │          ┌────────▼────────┐    │
      │ Determine Lift      │         │  TDC Counter    │          │ Gradually Change │    │
      │ Amount: Ltdc        │         └──────┬──────────┘          │ Lift Amount to   │    │
      │ in accordance with  │                │          S111       │ Idle Lift        │    │
      │   TDC Counter       │         ┌──────▼──────────┐          │ Amount Equation  │    │
      └────────────┬────────┘         │ Determine Lift  │          │      (4)         │    │
                   │        S106      │ Amount: Lpi by  │          └────────┬────────┘    │
      ┌────────────▼────────┐         │  PI Control     │                   │             │
      │ Determine Lift      │         │  Equation (3)   │                   │             │
      │ Amount: LIFT        │         └──────┬──────────┘                   │             │
      │ Equation (1)        │                │          S112                │             │
      └────────────┬────────┘         ┌──────▼──────────┐                   │             │
                   │                  │ Determine Lift  │                   │             │
                   │                  │ Amount: LIFT    │                   │             │
                   │                  │ Equation (2)    │                   │             │
                   │                  └──────┬──────────┘                   │             │
                   └────────────┬───────────┘                              │             │
        ┌──────────────────────▼──────────────────────────────────────────┴─────────────┘
        │          EXIT           │
        └─────────────────────────┘
```

EP 1 950 395 B1

Figure 4

```
        ┌─────────────────────┐
        │  Determination of Lift │
        │  Amount in accordance  │
        │   with TDC Counter     │
        └─────────────────────┘
                   │
                   ▼           S201
        ┌─────────────────────┐
        │  Detect the Number of  │
        │  Times of Measuring the│
        │      TDC Signal        │
        └─────────────────────┘
                   │
                   ▼           S203
        ╱─────────────────────╲
        ╲ Engine Water Temperature: Tw ╱
        ╱  > Predetermined Value ?      ╲
        ╲─────────────────────╱  YES
                   │ NO   S205              S207
                   ▼                          ▼
┌──────────────────────────┐  ┌──────────────────────────┐
│ Refer to Lower Engine Water │  │ Refer to Higher Engine Water│
│ Temperature Table based on  │  │ Temperature Table based on  │
│   the Number of Times of    │  │   the Number of Times of    │
│ Measuring the TDC Signal to │  │ Measuring the TDC Signal to │
│ Determine Lift Amount: Ltdc │  │ Determine Lift Amount: Ltdc │
└──────────────────────────┘  └──────────────────────────┘
                   │◄─────────────────────────┘
                   ▼
        ┌─────────────────────┐
        │       Return          │
        └─────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002188472 A
- EP 1669560 A
- EP 1344897 A
- US 2003140893 A1
- EP 1731746 A
- JP 2004036560 A
- JP 2000227033 A
- JP 3321021 B

**Non-patent literature cited in the description**

- **UENO.** A quick warm-up system during engine start-up period using adaptive control of intake air and ignition timing. *Honda R&D Technical Review,* 1999, vol. 11 (1